# EUROPÄISCHE PATENTSCHRIFT

(11) **EP 3 623 211 B1**
(45) Veröffentlichungstag und Bekanntmachung des Hinweises auf die Patenterteilung: **03.11.2021**
(21) Anmeldenummer: 19196560.7
(22) Anmeldetag: 10.09.2019
(51) Int. Cl.: B60N 2/50, B60N 2/52

(54) **FAHRZEUGSITZ**
VEHICLE SEAT
SIÈGE DE VÉHICULE

(30) Priorität: 11.09.2018 DE 102018122082
(43) Veröffentlichungstag der Anmeldung: 18.03.2020
(73) Patentinhaber: GRAMMER AG, 92289 Ursensollen (DE)
(72) Erfinder: Fillep, Johannes, 92262 Birgland (DE); Schanderl, Florian, 92521 Schwarzenfeld (DE)
(74) Vertreter: Hannke, Christian

(56) Entgegenhaltungen:
- DE-A1- 3 312 732
- DE-C1- 4 025 183

## Beschreibung

Die vorliegende Erfindung betrifft einen Fahrzeugsitz sowie ein Verfahren zur, insbesondere vollautomatischen, Höheneinstellung eines Fahrzeugsitzes gemäß den jeweiligen Oberbegriffen der Patentansprüche 1 und 7.

Ein Fahrzeugsitz weist üblicherweise zumindest einen Sitzfuß sowie eine relativ in vertikaler Richtung zu dem Sitzfuß bewegliche Sitzfläche auf, sodass während einer Fahrzeugbewegung und während einer Belegung der Sitzfläche mit einem Benutzer diese gegen den Sitzfuß einfedern kann.

Ein maßgeblicher Fokus bei der Entwicklung solcher Fahrzeugsitze liegt auch darauf, für ein möglichst breites Spektrum an zu benutzenden Personen stets eine passende Sitzdämpfung anbieten zu können. Dies führte bisher im Stand der Technik zu solchen Fahrzeugsitzen, die bei unterschiedlichen Benutzern unterschiedlichen Gewichts, jeweils in aufwändiger Art und Weise zum Beispiel mittels Schaltern oder sonstigen Verstellmaßnahmen, an einem Dämpfungselement zwischen dem Sitzfuß und der Sitzfläche den Anforderungen an einen idealen Dämpfungsbereich und einer idealen, zum Beispiel gewünschten Sitzhöhe, gerecht wurden. Diese Einstellverfahren sind jedoch sehr aufwendig und oft ungenau.

Demnach ist es unter anderem eine Aufgabe der vorliegenden Erfindung, einen Fahrzeugsitz anzugeben, bei welchem in besonders einfacher und kostengünstiger Art und Weise eine, insbesondere vollautomatische, Anpassung einer Sitzhöhe des Sitzteils relativ zu dem Sitzfuß und/oder ein Dämpfungsgrad des Sitzteils gegenüber dem Sitzfuß während einer Sitzbelegung einstellbar ist. Die Einstellung des Dämpfungsgrades kann insbesondere mit der Einstellung einer Dämpfungshärte eines zwischen dem Sitzfuß und der Sitzfläche angeordneten Dämpfungselements auf ein bestimmtes Benutzergewicht einhergehen (= Gewichtseinstellung). Die DE4025183 zeigt einen Fahrzeugsitz sowie ein Verfahren zur, insbesondere vollautomatischen, Höheneinstellung eines Fahrzeugsitzes gemäß den jeweiligen Oberbegriffen der Patentansprüche 1 und 7. Die oben genannte Aufgabe wird durch den Gegenstand des Patentanspruchs 1 sowie auch durch den Gegenstand des Verfahrensanspruchs 7 gelöst.

Um nun einen solchen Fahrzeugsitz anzubieten, umfasst der hier vorgeschlagene Fahrzeugsitz erfindungsgemäß zumindest eine Einstelleinrichtung zum vollautomatischen Einstellen und/oder Begrenzen einer Sitzhöhe des Sitzteils und/oder eines Dämpfungsgrades eines zwischen dem Sitzteil und dem Sitzfuß angeordneten Dämpfungselements während einer Sitzbelastung des Sitzteils durch die Benutzer, wobei die Einstelleinrichtung zumindest ein einstellbares Betätigungsmittel umfasst, welches, insbesondere von selbst, eine Einstellmechanik der Einstelleinrichtung betätigt, sobald durch die Sitzbelastung des Sitzteils die Sitzhöhe einen durch das Betätigungsmittel vorgegeben Höhengrenzwert unter- oder überschreitet, sodass die Sitzhöhe, insbesondere selbst regulierend, allein durch die Einstelleinrichtung je nach Sitzbelastungskraft des Sitzteils wieder in den Höhengrenzwert vollautomatisch zurück verschoben wird.

Auf ein aufwendiges Austauschen eines Dämpfungselements oder auf ein aufwendiges Neueinjustieren von entsprechenden gewünschten Sitzhöhen in Bezug auf einen bestimmten Benutzer kann daher vorliegend vollständig verzichtet werden, sodass ein Fahrzeugsitz bereitgestellt wird, welcher für alle möglichen Benutzer eine Nutzung innerhalb des Normhöhennutzungsbereichs ermöglicht.

Gemäß zumindest einer Ausführungsform umfasst der Fahrzeugsitz erfindungsgemäß ein Sitzteil zum Platznehmen eines Benutzers des Fahrzeugsitzes sowie zumindest einen Sitzfuß zur Montage des Fahrzeugsitzes auf einem Fahrzeugboden.

Darüber hinaus umfasst der erfindungsgemäße Fahrzeugsitz ein höhenverstellbares Verbindungsgestell, welches das Sitzteil mit dem Sitzfuß mechanisch miteinander verbindet, sodass das Sitzteil in Höhenrichtung gegenüber dem Sitzfuß bewegbar ist.

Erfindungsgemäß umfasst der Fahrzeugsitz zumindest eine Einstelleinrichtung zum vollautomatischen Einstellen und/oder Begrenzen einer Sitzhöhe des Sitzteils und/oder eines Dämpfungsgrades eines zwischen dem Sitzteil und dem Sitzfuß angeordneten Dämpfungselements, während einer Sitzbelastung des Sitzteils durch den Benutzer. Dabei umfasst die Einstelleinrichtung zumindest ein einstellbares Betätigungsmittel, welches von selbst eine Einstellmechanik der Einstelleinrichtung betätigt, sobald durch die Sitzbelastung des Sitzteils die Sitzhöhe einen, durch das Betätigungsmittel hervorgegebenen, Höhengrenzwert unter- oder überschreitet. Die Sitzhöhe wird dadurch vollautomatisch, insbesondere selbstregulierend allein durch die Einstelleinrichtung je nach Sitzbelastungsgrad des Sitzteils wieder in Höhengrenzwert zurückverschoben.

Erfindungsgemäß umfasst die hier beschriebene Einstelleinrichtung zumindest ein Ventilelement zum Be- oder Entlüften einer fluidischen Höhenverstelleinrichtung zum Einstellen, insbesondere zum Absenken eines Höhenabstandes zwischen dem Sitzteil und dem Sitzfuß. Eine "fluidische Höhenverstelleinrichtung" ist im Sinne der Erfindung eine solche Höhenverstelleinrichtung, deren Höhe mittels eines fluidischen Pumpkreislaufs einstellbar ist.

Darüber hinaus umfasst die Einstelleinrichtung erfindungsgemäß zumindest ein Schalterelement zum Betätigen einer Fluidpumpe zur Vergrößerung des Höhenabstandes zwischen dem Sitzteil und dem Sitzfuß, wobei das Betätigungsmittel das Ventilelement dann betätigt, wenn der Höhengrenzwert überschritten ist, und das Betätigungsmittel das Schalterelement dann betätigt, wenn ein Höhengrenzwert unterschritten ist.

Zum Beispiel kann daher der Normhöhennutzungsbereich in Höhenrichtung als Intervall zwischen zwei Grenzwerten definiert sein, wobei ein oberer Grenzwert einen solchen darstellt, welcher bei Überschreitung ein Betätigen der Ventileinrichtung verursacht, während bei Unterschreiten eines unteren Grenzwertes das Schaltteil betätigt wird.

Statt der oben beschriebenen Fluidpumpe kann auch ein Kompressor genutzt werden. Erfindungsgemäß ist ein Hebelelement des Betätigungsmittels um eine Drehachse, welche vorzugsweise senkrecht zur Höhenrichtung verläuft, drehbeweglich angeordnet und insbesondere an dem Sitzfuß oder an dem Sitzteil drehbeweglich gelagert.

So wird das Hebelelement des Betätigungselementes über eine Höhenbewegung des Sitzteils relativ zum Sitzfuß um diese Drehachse gedreht, sodass in einer ersten Drehstellung des Hebelelements dieses Hebelelement das Ventilelement betätigt und in einer zweiten Drehstellung des Hebelelements dieses Hebelelement das Schaltelement betätigt.

Zwischen diesen beiden Drehstellungen ist beispielsweise ein Drehspielraum einer gewissen Gradzahl vorhanden. Innerhalb dieses Drehspielraums mag sich zwar das Hebelelement drehen, jedoch wird weder das Schaltelement noch das Ventilelement durch dieses Hebelelement betätigt. Innerhalb dieses Drehspielraums befindet sich daher die Sitzfläche vorzugsweise in dem Normhöhennutzungsbereich.

Gemäß zumindest einer Ausführungsform weist das Betätigungselement zumindest ein Höheneinstellelement, zum Beispiel ein Seil, sowie zumindest ein Rückstellelement, zum Beispiel eine Drehfeder, zum Rückstellen des Hebelelements um die Drehachse auf. Dabei ist das Höheneinstellelement mechanisch mit einem ersten Hebelarm des Hebelelements verbunden und ein zweiter Hebelarm des Hebelelements betätigt das Ventilelement oder das Schalterelement je nach Drehstellung des Hebelelements. Das Hebelelement kann mehr als zwei Hebelarme aufweisen. Hierzu können die einzelnen Hebelarme sternförmig von einem Zentrum des Hebelelements wegragen. Zudem kann das Hebelelement einstückig sein. Dies kann heißen, dass das Hebelelement in einem Stück gefertigt ist, anstatt aus mehreren zusammengefügten Teilen.

Gemäß zumindest einer Ausführungsform weist das Höheneinstellelement zumindest ein, insbesondere vorspannbares Feder- und/oder Dämpfungselement und/oder Ratschen- und/oder Schieberelement auf, mittels welchem eine Länge, und/oder ein Vorspanngrad des Höheneinstellelements einstellbar ist.

Gemäß zumindest einer Ausführungsform weist das höhenverstellbare Verbindungsgestell ein Scherengestell auf, welches zumindest zwei Scherenarme aufweist, die zwischen den Sitzteilen und dem Sitzfuß angeordnet sind. Vorzugsweise sind die beiden Scherenarme um eine Scherenarmdrehachse drehbar zueinander angeordnet. Diese Scherenarmdrehachse kann parallel zur Drehachse der Einstelleinrichtung verlaufen.

Gemäß zumindest einer Ausführungsform ist die Einstelleinrichtung frei von einer rein elektronischen Steuer- und/oder Regeleinrichtung, sodass eine Einstellung der Höhe des Sitzteils mechanisch erfolgt.

"Rein elektronische Steuer- und Regeleinrichtung" bezeichnet eine solche Steuerungs- und/oder Regeleinrichtung, welche ausschließlich aufgrund einer in diese Einrichtung softwaretechnisch implementierte Höhenregelung und/oder Höhensteuerung des Sitzteils relativ zum Sitzfuß erzeugt ist. Mit anderen Worten kann die hier beschriebene Einstelleinrichtung in zumindest einer Ausführungsform durchaus auch elektronische Schalterelemente, wie einen Taster oder sonstige Schalter zur Verschaltung aufweisen. Diese sind jedoch nicht in zumindest einer Ausführungsform, zumindest nicht nur, durch eine Steuerung und/oder Regelung eines entsprechenden Steuer- und/oder Regelchips verursacht.

Darüber hinaus umfasst die vorliegende Erfindung ein Verfahren zur, insbesondere vollautomatischen, Höheneinstellung eines Fahrzeugsitzes. Insbesondere kann das hier beschriebene Verfahren einen wie obig beschriebenen Fahrzeugsitz nutzen. Insofern sind alle vorgenannten den Fahrzeugsitz betreffenden Merkmale auch für das hier beschriebene Verfahren offenbart und umgekehrt.

Gemäß zumindest einer Ausführungsform umfasst das Verfahren zur, insbesondere vollautomatischen, Höheneinstellung des Fahrzeugsitzes zunächst einen wie obig beschriebenen Fahrzeugsitz mit einem Sitzteil zum Platznehmen eines Benutzers des Fahrzeugsitzes. Außerdem umfasst es zumindest einen Sitzfuß zur Montage des Fahrzeugsitzes auf einem Fahrzeugboden und des Weiteren ein höhenverstellbares Verbindungsgestell, welches das Sitzteil mit dem Sitzfuß mechanisch verbindet, sodass das Sitzteil in Höhenrichtung gegenüber dem Sitzfuß bewegbar ist.

Erfindungsgemäß umfasst das Verfahren daher die Verwendung zumindest einer Einstelleinrichtung zum automatischen Einstellen und/oder Begrenzen einer Sitzhöhe des Sitzteils und/oder eines Dämpfungsgrades eines zwischen dem Sitzteil angeordneten Dämpfungselements während einer Sitzbelastung des Sitzteils durch den Benutzer. Dabei umfasst die Einstelleinrichtung zumindest ein einstellbares Betätigungsmittel, welches von selbst eine Einstellmechanik der Einstelleinrichtung betätigt, sobald durch die Sitzbelastung des Sitzteils die Sitzhöhe einen vorgegebener Höhengrenzwert unter- oder überschreitet, sodass die Sitzhöhe insbesondere selbstregulierend, allein durch die Einstelleinrichtung, je nach Sitzbelastungsgrad des Sitzes, wieder auf den Höhengrenzwert vollautomatisch zurückverschoben wird.

Weitere Vorteile, Ziele und Eigenschaften der vorliegenden Erfindung werden anhand nachfolgender Beschreibung und anliegender Zeichnungen erläutert, in welchen beispielhaft in verschiedenen Ausführungsbeispielen ein hier beschriebener erfindungsgemäßer Fahrzeugsitz gezeigt ist.

Komponenten, welche in den Figuren wenigstens im Wesentlichen hinsichtlich ihrer Funktion übereinstimmen, können hierbei mit gleichen Bezugszeichen gekennzeichnet sein, wobei diese Komponenten nicht in allen Figuren gekennzeichnet und erläutert sein müssen.

In den Figuren zeigen
- Fig. 1A bis 1C: ein erstes Ausführungsbeispiel einer Einstellmechanik eines hier beschriebenen erfindungsgemäßen Fahrzeugsitzes;
- Fig. 2: eine schematische Höhenprofilsteuerung zwischen verschiedenen Sitzhöhen;
- Fig. 3A bis 3C: in weiteren schematisch perspektivischen Zeichnungen das Ausführungsbeispiel der Figuren 1A bis 1C mit weiteren Merkmalen ergänzt;
- Fig. 4: einen hier beschriebenen erfindungsgemäßen Fahrzeugsitz.

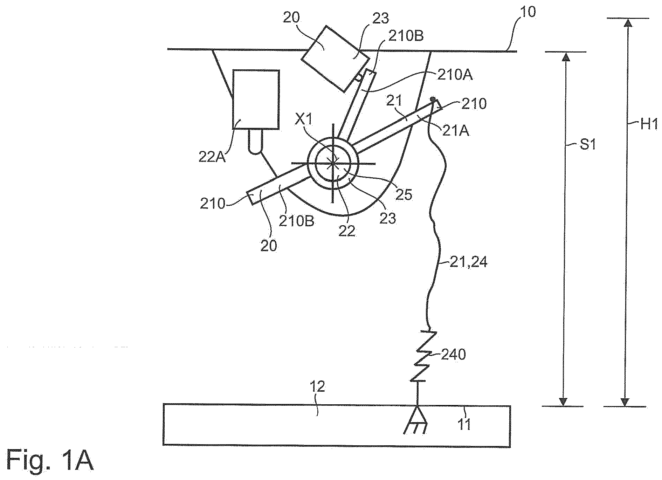

Wie aus der Figur 1A erkannt werden kann, ist eine Sitzfläche eines Sitzteils 10 zum Platznehmen eines Benutzers des Fahrzeugsitzes 1 zu niedrig eingestellt. Um diese zu niedrige Sitzposition höher zu stellen, umfasst der in der Figur 1A zwar nicht explizit gezeigte, jedoch trotzdem vorhandene Fahrzeugsitz 1, eine Einstellmechanik 22 zum vollautomatischen Einstellen und/oder Begrenzen einer Sitzhöhe S1 des Sitzteils 10 während einer Sitzbelastung des Sitzteils 10 durch einen Benutzer. Dabei umfasst die Einstelleinrichtung 20 zumindest ein einstellbares Betätigungsmittel 21, welches von selbst eine Einstellmechanik 22 der Einstelleinrichtung 20 betätigt, sobald durch die Sitzbelastung des Sitzteils 10 die Sitzhöhe S1 einen durch das Betätigungsmittel 21 vorgegebenen Höhengrenzwert H1 unter- oder überschreitet, sodass die Sitzhöhe S1, insbesondere selbstregulierend, allein durch die Einstelleinrichtung 20 je nach Sitzbelastungsgrad des Sitzteils 10 wieder vollautomatisch zum Höhengrenzwert H1 zurückgeschoben wird. Das Sitzteil 10 wird entlang einer Einfederrichtung H2 gegenüber dem Sitzfuß 11 bewegt.

Insbesondere ist daher der Figur 1A eine solche Einstelleinrichtung 20 zu entnehmen, welche ein Ventilelement 22A, insbesondere umfassend einen Mikroschalter zum Betätigen des Ventilelements 22A, zum Be- oder Entlüften einer fluidischen Höhenverstelleinrichtung (aus Vereinfachungsgründen nicht gezeigt) zum Einstellen und insbesondere zum Absenken eines Höhenabstandes zwischen dem Sitzteil 10 und dem Sitzfuß 11 aufweist. Zudem umfasst die Einstelleinrichtung 20 ein Schalterelement 23 zum Betätigen einer Fluidpumpe oder eines Fluidkompressors zur Vergrößerung des Höhenabstandes zwischen dem Sitzteil 10 und dem Sitzfuß 11.

Insbesondere kann aus der Figur 1A erkannt werden, dass das Betätigungsmittel 21 das Ventilelement 22A dann betätigt, wenn der Höhengrenzwert H1 überschritten ist und das Betätigungsmittel 21 das Schalterelement 23, welches ein Zuluftventil umfassen und/oder betätigen kann, dann betätigt, wenn ein Höhengrenzwert H1 unterschritten ist.

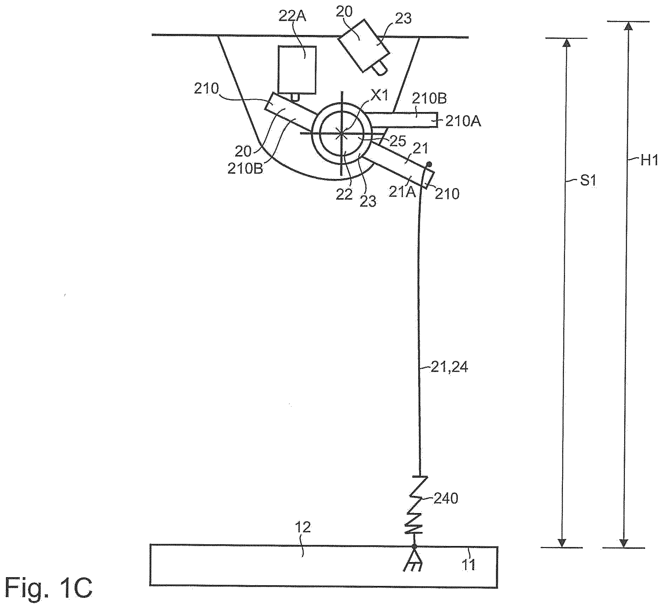

Dabei weist die Einstelleinrichtung 20 ein Hebelelement 210 auf, welches ein Teil des Betätigungsmittels 21 ist und wobei das Hebelelement 210 um eine Drehachse X1, welche senkrecht zur Höhenrichtung H1 verläuft, drehbeweglich insbesondere an dem Sitzteil 10 gelagert ist, sodass über eine Höhenbewegung des Sitzteils 10 relativ zum Sitzfuß 11 das Hebelelement 210 des Betätigungsmittels 21 um die Drehachse X1 gedreht wird, sodass in einer ersten Drehstellung des Hebelelements 210 dieses Hebelelement 210 das Ventilelement 22A betätigt (siehe Figur 1C) und in einer zweiten Drehstellung des Hebelelements 210 dieses Hebelelement 210 das Schalterelement 23 (siehe Figur 1A) betätigt. Als rein beispielhaft in den Figuren 1A-1C dargestellt, ist das Hebelelement 210 durch drei sternförmig von der Drehachse X1 wegragenden Hebelstreben gebildet. Eine Hebelstrebe (= Hebelarm 210B) betätigt das Ventilelement 22A und eine andere Hebelstrebe (= Hebelarm 210A) betätigt das Schalterelement 23.

Darüber hinaus ist aus der Figur 1A erkennbar, dass das Betätigungselement 21 ein Höheneinstellelement 24, im vorliegenden Fall ein Seil, aufweist, welches an einer dritten Hebelstrebe 210C des Hebelelements 210 befestigt ist. Zudem weist das Betätigungselement 21 ein Rückstellelement 25 auf, insbesondere in Form einer Drehfeder, wobei die Drehfeder dafür vorgesehen ist, das Hebelelement 210 um die Drehachse X1 zurückzustellen, sodass ein dauerhafter Rückstelldruck des Hebelelements 210 in Richtung des Schalterelements 23 erzeugt ist.

Besonders eingängig ist aus der Figur 1A erkennbar, dass das dort dargestellte Höheneinstellelement 24 in Form des Seils erschlafft ist. Dabei ist das Seil mit einem Sitzfuß 11 mechanisch durch ein Federelement 240 verbunden.

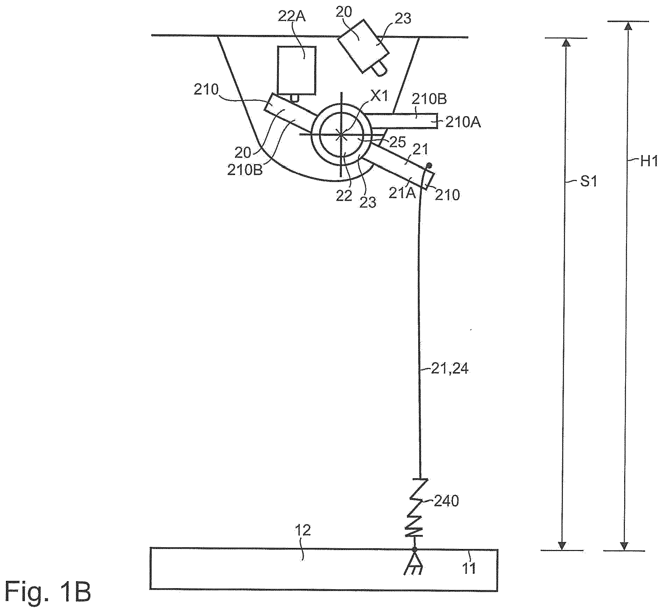

Ist nämlich nun das dort gezeigte Seil erschlafft, wird das Hebelelement 210 mittels des ersten Hebelarms 210A automatisch durch die Drehfeder auf das Schalterelement 23 gedrückt. Das Schalterelement 23 wiederum ist mit dem oben genannten Fluidkreislauf, insbesondere einem solchen Kreislauf, welcher eine Fluidpumpe oder einen Fluidkompressor 19 aufweist, verbunden. Es wird also zum Beispiel in ein zwischen dem Sitzfuß 11 und dem Sitzteil 10 verbautes Dämpfungs- und/oder Ausdehnungselement ein Fluid hineingepumpt, sodass über dieses beispielhafte Dämpfungselement das Sitzteil 10 von dem Sitzfuß 11 weggedrängt wird, sodass eine Sitzhöhe S1 immer wieder auf den Höhengrenzwert H1 zurückkehrt (siehe Figur 1B).

Dort ist nämlich erkennbar, dass weder das Ventilelement 22A noch das Schalterelement 23 durch das Hebelelement 210 betätigt sind, sodass somit die gesamte Einstellmechanik 22 unbetätigt ist.

In der Figur 1C ist der umgekehrte Fall gezeigt, in welchem eine Sitzhöhe S1 des Sitzteils 10 zu hoch ist. Dies kann sich insbesondere durch einen besonders leichten Benutzer ergeben. In diesem Fall ist das Höheneinstellelement 24, also das Seil, sehr stark gespannt und zieht an diesem ersten Hebel 210 den zweiten Hebelarm 210B oder einen dritten Hebelarm 210C gegen das Ventilelement 22A. In diesem Fall wird also statt in eine Dämpfungsmechanik ein Fluid einzupumpen, dieses Fluid aus dieser Dämpfungsmechanik entlassen, sodass sich damit automatisch das Sitzteil 10 auf den Sitzfuß 11 auf den Höhengrenzwert H1 hinabsenkt, ab dem die Feder nur noch derart leicht gespannt ist, dass sich eine Drehkraft zwischen den Rückstellelement 25 und der durch das Höheneinstellelement 24 die auf den Hebel 210 ausgeübte Kraft genau aufhebt und sich daher wie in der Figur 1C ein Ausgleichszustand ergibt, sodass sich daher der in der Figur 1C zu hoch eingestellte Sitz automatisch auf den Höhengrenzwert H1 der Figur 1B hineinbewegt.

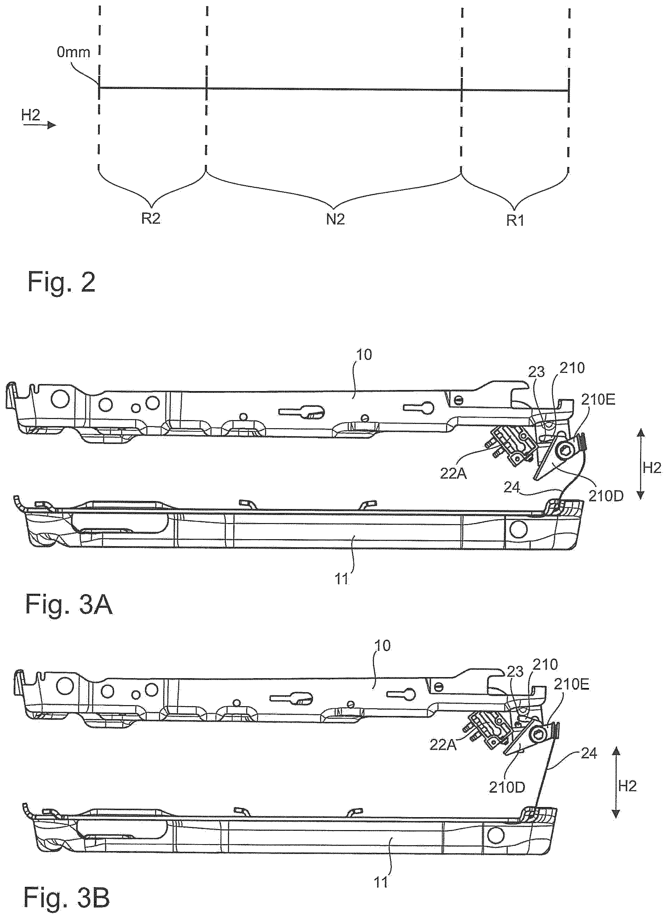

In den Figuren 3A bis 3C sind in weiteren schematisch perspektivischen Zeichnungen das Ausführungsbeispiel der Figuren 1A bis 1C mit weiteren Merkmalen ergänzt dargestellt.

Ein Unterschied liegt bereits darin, dass auf separate Hebelarme 210A, 210B verzichtet ist und stattdessen ein um die Drehachse X drehbeweglicher Keil 210D gewählt wurde, wobei eine Seitenfläche dieses Keils 210D das Ventilelement 22A betätigt. Ein Hebelarm 210 betätigt das Schalterelement 23 je nach Drehstellung.

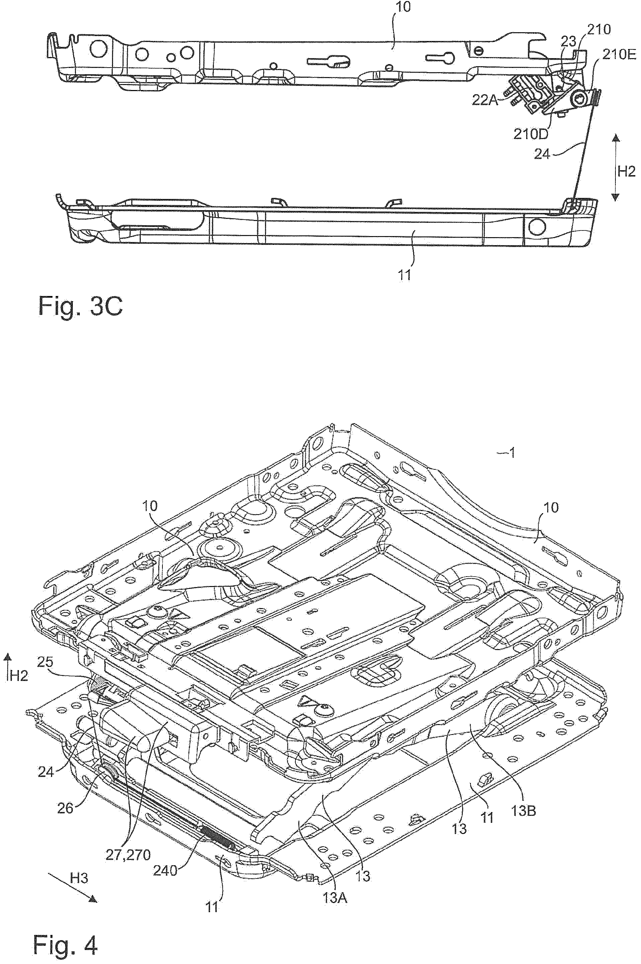

Das Höheneinstellelement 24, also vorliegend das Seil, ist an einem Fortsatz 210E des Keils 210D befestigt. Zudem ist, wie aus den Figuren 3A bis 3C offensichtlich, dass das Seil in der Figur 3A nicht gespannt ist. In der Figur 3B ist es zwar gespannt, jedoch nur soweit dass eine Rückstellkraft der Drehfeder aufgehoben wird und in der Figur 3C überwiegt zunächst die Kraft des Seil, wodurch die Seitenfläche des Keils 210D gegen das Ventilelement 22A gedrängt wird. Insofern ist die Funktionsweise der in den Figuren 3A bis 3C gezeigten Vorrichtung die gleiche wie die Funktionsweise der in den Figuren 1A bis 1C gezeigten Vorrichtung.

In der Figur 2 sind rein schematisch ein oberer Restfederweg R1 sowie ein unterer Restfederweg R2 angegeben. Der untere Restfederweg R2 ist ein solcher Federweg, welcher zum Beispiel von einer Federhöhe 0 mm bis 50 mm reicht, wobei der obere Restfederweg R1 vorliegend einen Federweg zwischen 130 und 180 mm aufweist. Dazwischen befindet sich ein Normhöhennutzungsbereich N2. Mittels eines Hebel- und/oder Schieber- und/oder Ratschenelements kann eine Seillänge innerhalb des Normhöhennutzungsbereiches N2 eingestellt werden. Eine Veränderung der Seillänge kann jedoch nicht bis in die Restwegfederlängen R1, R2 hineinführen. Mit anderen Worten kann ein Gleichgewichtszustand vorzugsweise lediglich innerhalb des Normhöhennutzungsbereichs N2 eingestellt werden. Die Restfederwege R1, R2 sind daher vorzugsweise solche Federstrecken, in welche der Sitz ein- oder ausfedern kann, jedoch selbstständig auf einen vorgebbaren Gleichgewichtswert innerhalb des Normhöhennutzungsbereichs N2 zurückkehrt.

In der Figur 4 ist in einer schematisch perspektivischen Ansicht ein Ausführungsbeispiel eines erfindungsgemäßen Fahrzeugsitzes 1 gezeigt. Dabei zeigt die Figur 4 den Fahrzeugsitz 1 vollständig, wobei die Figuren 3A bis 3C Seitenansichten eines Ausschnitts dieses Fahrzeugsitzes 1 zeigen. Zunächst ist erkennbar, dass das höhenverstellbare Verbindungsgestell 13 ein Scherengestell aufweist, welches zumindest zwei Scherenarme 13A, 13B umfasst, die zwischen dem Sitzteil 10 und dem Sitzfuß 11 angeordnet sind.

Besonders deutlich ist in der Figur 4 eine Umlenkmechanik mittel zumindest eines Umlenkrades 26 erkennbar. Das Umlenkrad 26 ist im Sitzfuß 11 verbaut, sodass eine in horizontaler Richtung (senkrecht zur Einfederrichtung) das Federelement 240 verbaut ist. Zudem ist das Rückstellelement 25 in Form der Drehfeder erkennbar.

Darüber hinaus ist eine Hebel- und/oder Schiebemechanik 27 dargestellt, über welche eine Seillänge voreingestellt werden kann. Dabei kann es sich um einen Hebel handeln, welcher ebenso parallel um die Drehachse X drehbar ist, wobei an einem Hebelarm dann ein Seilende befestigt ist, und das andere Seilende an dem Sitzfuß 11 befestigt ist.

In der Figur 4 ist rein beispielhaft ein Drehschieber 270 dargestellt, welcher in der horizontalen Richtung H3 verschoben und/oder um eine zur horizontalen Richtung H3 parallele Achse verschwenkt werden kann. Ein oberes Seilende ist daher mechanisch direkt oder indirekt an dem Drehschieber 270 verbunden. Das Betätigungsmittel 21 betätigt, wie aus den Figuren 3A bis 3C erkennbar, nicht nur das Ventilelement 22A und das Schalterelement 23 sondern ist ebenso ein Umleitelement für das Seil um dieses in die horizontale Richtung H3 wieder umleiten zu können.

### Bezugszeichenliste

- 1: Fahrzeugsitz
- 10: Sitzteil
- 11: Sitzfuß
- 12: Träger
- 13: Verbindungsgestell
- 13A: Scherenarm
- 13B: Scherenarm
- 20: Einstelleinrichtung
- 21: Betätigungsmittel
- 21A: Pleuelelement
- 22: Einstellmechanik
- 22A: Ventilelement
- 23: Schalterelement
- 24: Höheneinstellelement
- 25: Rückstellelement
- 26: Umlenkrad
- 27: Hebel- und oder Schiebemechanik
- 210: Hebelelement
- 210A: erster Hebelarm
- 210B: zweiter Hebelarm
- 210C: dritter Hebelarm
- 210D: Keil
- 210E: Fortsatz
- 240: Federelement
- 270: Drehschieber

- H1: Höhengrenzwert
- H2: Einfederrichtung
- H3: horizontale Richtung
- R1: oberer Restfederweg
- R2: unterer Restfederweg
- S1: Sitzhöhe
- VEH1: voreingestellte Höhe
- X1: Drehachse
- ZH1: Zielhöhe

## Patentansprüche

1. Fahrzeugsitz (1), mit
- einem Sitzteil (10) zum Platznehmen eines Benutzers des Fahrzeugsitzes (1),
- zumindest einem Sitzfuß (11) zur Montage des Fahrzeugsitzes (1) auf einem Fahrzeugboden,
- einem höhenverstellbaren Verbindungsgestell (13), welches das Sitzteil (10) mit dem Sitzfuß (11) mechanisch miteinander verbindet, sodass das Sitzteil (10) in Höhenrichtung gegenüber dem Sitzfuß (11) bewegbar ist, wobei zumindest eine Einstelleinrichtung (20) zum vollautomatischen Einstellen und/oder Begrenzen einer Sitzhöhe (S1) des Sitzteils (10) während einer Sitzbelastung des Sitzteils (10) durch den Benutzer, wobei die Einstelleinrichtung (20) zumindest ein einstellbares Betätigungsmittel (21) umfasst, welches von selbst eine Einstellmechanik (22) der Einstelleinrichtung (20) betätigt, sobald durch die Sitzbelastung des Sitzteils (10) die Sitzhöhe (S1) einen durch das Betätigungsmittel (21) vorgegebenen Höhengrenzwert (H1) unter- oder überschreitet, sodass die Sitzhöhe (S1) selbstregulierend, durch die Einstelleinrichtung (20) je nach Sitzbelastungsgrad des Sitzteils (10) wieder in den Höhengrenzwert (H1) vollautomatisch zurückverschoben wird, wobei die Einstelleinrichtung (20)
- zumindest ein Ventilelement (22A) zum Be- oder Entlüften einer fluidischen Höhenverstelleinrichtung zum Einstellen zum Absenken eines Höhenabstandes zwischen dem Sitzteil (10) und dem Sitzfuß (11), und
- zumindest ein Schalterelement (23) zum Betätigen einer Fluidpumpe zur Vergrößerung des Höhenabstandes zwischen dem Sitzteil (10) und dem Sitzfuß (11) aufweist, wobei
das Betätigungsmittel (21) das Ventilelement (22A) dann betätigt, wenn der Höhengrenzwert (H1) überschritten ist, und das Betätigungsmittel (21) das Schalterelement (23) dann betätigt, wenn ein Höhengrenzwert (H1) unterschritten ist, **dadurch gekennzeichnet, dass** ein Hebelelement (210), umfassend drei sternförmig von einer Drehachse (X1) wegragende Hebelstreben (210A, 210B, 210C), des Betätigungsmittels (21) um die Drehachse (X1), welche senkrecht zur Höhenrichtung verläuft, drehbeweglich an dem Sitzfuß (11) oder an dem Sitzteil (10), gelagert ist, sodass über eine Höhenbewegung des Sitzteils (10) relativ zum Sitzfuß (11) das Hebelelement (210) des Betätigungselements (21) um diese Drehachse (X1) gedreht wird, sodass in einer ersten Drehstellung des Hebelelements (210) eine erste Hebelstrebe (210B) das Ventilelement (22A) betätigt und in einer zweiten Drehstellung des Hebelelements (210) eine zweite Hebelstrebe (210A) das Schalterelement (23) betätigt, wobei das Betätigungselement (21) ein Höheneinstellelement (24) aufweist, welches an einer dritten Hebelstrebe (210C) befestigt ist.

2. Fahrzeugsitz (1) nach Anspruch 1,
**dadurch gekennzeichnet, dass**
das Betätigungselement (21)
- das Höheneinstellelement (24) sowie
- zumindest ein Rückstellelement (25) zum Rückstellen des Hebelelements (210) um die Drehachse (X1)
aufweist.

3. Fahrzeugsitz (1) nach Anspruch 2,
**dadurch gekennzeichnet, dass**
das Höheneinstellelement (24) ein Seil ist und das Rückstellelement (25) eine Drehfeder ist.

4. Fahrzeugsitz (1) nach Anspruch 3,
**dadurch gekennzeichnet, dass** das Höheneinstellelement (24) zumindest ein vorspannbares, Feder- und/oder Dämpfungselement (240) und/oder Ratschen- und/oder Schieberelement aufweist, mittels welchem eine Länge, und/oder Vorspanngrad des Höheneinstellelements (24) einstellbar ist.

5. Fahrzeugsitz (1) nach zumindest einem der vorhergehenden Ansprüche,
**dadurch gekennzeichnet, dass**
das höhenverstellbare Verbindungsgestell (13) ein Scherengestell aufweist, welches zumindest zwei Scherenarme (13A, 13B) umfasst, die zwischen dem Sitzteil (10) und dem Sitzfuß (11) angeordnet sind.

6. Fahrzeugsitz (1) nach zumindest einem der vorhergehenden Ansprüche,
**dadurch gekennzeichnet, dass**
die Einstelleinrichtung (20) frei von eine rein elektronischen Steuer- und/oder Regeleinrichtung, sodass eine Einstellung mechanisch erfolgt.

7. Verfahren zur vollautomatischen Höheneinstellung eines Fahrzeugsitzes (1) nach einem der Ansprüche 1 bis 6, mit
- einem Sitzteil (10) zum Platznehmen eines Benutzers des Fahrzeugsitzes (1),
- zumindest einem Sitzfuß (11) zur Montage des Fahrzeugsitzes (1) auf einem Fahrzeugboden,
- einem höhenverstellbaren Verbindungsgestell (13), welches das Sitzteil (10) mit dem Sitzfuß (11) mechanisch miteinander verbindet, sodass das Sitzteil (10) in Höhenrichtung gegenüber dem Sitzfuß (11) bewegbar ist,
**gekennzeichnet, durch**
zumindest eine Einstelleinrichtung (20) zum vollautomatischen Einstellen und/oder Begrenzen einer Sitzhöhe (S1) des Sitzteils (10) während einer Sitzbelastung des Sitzteils (10) durch den Benutzer, wobei die Einstelleinrichtung (20) zumindest ein einstellbares Betätigungsmittel (21) umfasst, welches von selbst eine Einstellmechanik (22) der Einstelleinrichtung (20) betätigt, sobald durch die Sitzbelastung des Sitzteils (10) die Sitzhöhe (S1) einen durch das Betätigungsmittel (21) vorgegebenen Höhengrenzwert (H1) unter- oder überschreitet, sodass die Sitzhöhe (S1) selbstregulierend durch die Einstelleinrichtung (20) je nach Sitzbelastungsgrad des Sitzteils (10) wieder in den Höhengrenzwert (H11) vollautomatisch zurückverschoben wird.

## Claims

1. Vehicle seat (1), having
- a seat part (10) for seating a user of the vehicle seat (1),
- at least one seat base (11) for mounting the vehicle seat (1) on a vehicle floor,
- a height-adjustable connecting frame (13) which connects the seat part (10) to the seat base (11) mechanically, so that the seat part (10) can be moved in the vertical direction with respect to the seat base (11),
wherein at least one setting device (20) for fully automatically setting and/or limiting a seat height (S1) of the seat part (10) during a seat loading of the seat part (10) by the user, the setting device (20) comprising at least one adjustable actuating means (21) which by itself actuates a setting mechanism (22) of the setting device (20) as soon as the seat height (S1), as a result of the seat loading of the seat part (10), undershoots or exceeds a height limit value (H1) which is predefined by the actuating means (21), so that the seat height (S1) is fully automatically shifted back to the height limit value (H1), in particular in a self-regulating manner, by the setting device (20) depending on the degree of seat loading of the seat part (10), wherein
the setting device (20) has
- at least one valve element (22A) for aerating or deaerating a fluidic height adjustment device for setting, in particular for lowering, a vertical spacing between the seat part (10) and the seat base (11), and
- at least one switch element (23) for actuating a fluid pump for increasing the vertical spacing between the seat part (10) and the seat base (11),
the actuating means (21) actuating the valve element (22A) when the height limit value (H1) is exceeded, and the actuating means (21) actuating the switch element (23) when a height limit value (H1) is undershot,
**characterized in that**
a lever element (210), comprising three lever struts (210A, 210B, 210C) which protrude away from the rotational axis (X1) in a star-shaped manner, of the actuating means (21) is mounted on the seat base (11) or on the seat part (10), in a rotationally movable manner about the rotational axis (X1) which extends perpendicularly with respect to the vertical direction, so that the lever element (210) of the actuating element (21) is rotated about the said rotational axis (X1) by a vertical movement of the seat part (10) relative to the seat base (11), so that, in a first rotational position of the lever element (210), a first lever strut (210B) actuates the valve element (22A), and, in a second rotational position of a second lever strut (210A), the said lever element (210) actuates the switch element (23), wherein the actuating element (21) has a height setting element (24) which is fastened to a third lever strut (210C).

2. Vehicle seat (1) according to claim 1,
**characterized in that**
the actuating element (21) has
- the height setting element (24), and
- at least one restoring element (25) for resetting the lever element (210) about the rotational axis (X1).

3. Vehicle seat (1) according to claim 2,
**characterized in that**
the height setting element (24) is a cable and the restoring element (25) is a torsion spring.

4. Vehicle seat (1) according to claim 3,
**characterized in that**
the height setting element (24) has at least one prestressable spring and/or damping element (240) and/or ratchet and/or slide element, by means of which a length and/or degree of prestress of the height setting element (24) can be set.

5. Vehicle seat (1) according to at least one of the preceding claims,
**characterized in that**
the height-adjustable connecting frame (13) has a scissor frame which comprises at least two scissor arms (13A, 13B) which are arranged between the seat part (10) and the seat base (11).

6. Vehicle seat (1) according to at least one of the preceding claims,
**characterized in that**
the setting device (20) is free of a purely electronic control and/or regulating device, so that a setting takes place mechanically.

7. Method for fully automatic height setting of a vehicle seat (1) according to any one of claims 1 to 6, having
- a seat part (10) for seating a user of the vehicle seat (1),
- at least one seat base (11) for mounting the vehicle seat (1) on a vehicle floor,
- a height-adjustable connecting frame (13) which connects the seat part (10) to the seat base (11) mechanically, so that the seat part (10) can be moved in the vertical direction with respect to the seat base (11),
**characterized by**
at least one setting device (20) for fully automatically setting and/or limiting a seat height (S1) of the seat part (10) during a seat loading of the seat part (10) by the user, the setting device (20) comprising at least one adjustable actuating means (21) which by itself actuates a setting mechanism (22) of the setting device (20) as soon as the seat height (S1), as a result of the seat loading of the seat part (10), undershoots or exceeds a height limit value (H1) which is predefined by the actuating means (21), so that the seat height (S1) is fully automatically shifted back to the height limit value (H11) in a self-regulating manner, by the setting device (20) depending on the degree of seat loading of the seat part (10).

## Revendications

1. Siège de véhicule (1), avec
- une partie assise (10) sur laquelle un utilisateur du siège de véhicule (1) peut prendre place ;
- au moins une embase de siège (11) pour le montage du siège de véhicule (1) sur un plancher de véhicule ;
- un châssis de liaison (13) réglable en hauteur, lequel relie mécaniquement l'une à l'autre la partie assise (10) avec l'embase de siège (11), de telle sorte que la partie assise (10) est déplaçable dans la direction de la hauteur par rapport à l'embase de siège (11),
au moins un dispositif de réglage (20) pour régler et/ou limiter de manière entièrement automatique une hauteur de siège (S1) de la partie assise (10) pendant une charge d'assise de la partie assise (10) par l'utilisateur, le dispositif de réglage (20) comportant au moins un moyen d'actionnement réglable (21), lequel actionne lui-même un mécanisme de réglage (22) du dispositif de réglage (20), dès que, par la charge d'assise de la partie assise (10), la hauteur d'assise (S1) descend au-dessous ou dépasse une valeur limite de hauteur (H1) prédéfinie par le moyen d'actionnement (21), de telle sorte que la hauteur d'assise (S1) par autorégulation est ramenée à nouveau dans la valeur limite de hauteur (H1) de manière entièrement automatique par le dispositif de réglage (20) à chaque fois en fonction du degré de charge d'assise de la partie assise (10), le dispositif de réglage (20) présentant :
- au moins un élément soupape (22A) pour aérer ou désaérer un dispositif fluidique de réglage en hauteur pour le réglage en vue d'abaisser une distance en hauteur entre la partie assise (10) et l'embase de siège (11) ; et
- au moins un élément de commutation (23) pour l'actionnement d'une pompe à fluide pour augmenter la distance en hauteur entre la partie assise (10) et l'embase de siège (11),
le moyen d'actionnement (21) actionnant l'élément soupape (22A) lorsque la valeur limite de hauteur (H1) est dépassée, et le moyen d'actionnement (21) actionnant l'élément de commutation (23) lorsqu'une valeur limite de hauteur (H1) n'est pas atteinte,
**caractérisé par le fait qu'**
un élément levier (210), comportant trois barres de levier (210A, 210B, 210C) faisant saillie en forme d'étoile à partir d'un axe de rotation (X1), du moyen d'actionnement (21) est monté sur l'embase de siège (11) ou sur la partie assise (10) déplaçable en rotation autour de l'axe de rotation (X1), lequel s'étend perpendiculairement à la direction de la hauteur, de telle sorte que l'élément levier (210) de l'élément d'actionnement (21) tourne autour de cet axe de rotation (X1) par un mouvement en hauteur de la partie assise (10) par rapport à l'embase de siège (11), de telle sorte que, dans une première position en rotation de l'élément levier (210), une première barre de levier (210B) actionne l'élément soupape (22A) et, dans une deuxième position en rotation de l'élément levier (210), une deuxième barre de levier (210A) actionne l'élément de commutation (23), l'élément d'actionnement (21) présentant un élément de réglage en hauteur (24), lequel est fixé sur une troisième barre de levier (210C).

2. Siège de véhicule (1) selon la revendication 1,
**caractérisé par le fait que**
l'élément d'actionnement (21) présente
- l'élément de réglage en hauteur (24) ainsi qu'
- au moins un élément de rappel (25) pour rappeler l'élément levier (210) autour de l'axe de rotation (X1).

3. Siège de véhicule (1) selon la revendication 2,
**caractérisé par le fait que**
l'élément de réglage en hauteur (24) est un câble et l'élément de rappel (25) est un ressort de torsion.

4. Siège de véhicule (1) selon la revendication 3,
**caractérisé par le fait que**
l'élément de réglage en hauteur (24) présente au moins un élément ressort et/ou amortisseur (240) et/ou un élément à cliquet et/ou coulissant pouvant être précontraint, au moyen duquel une longueur et/ou un degré de précontrainte de l'élément de réglage en hauteur (24) est réglable.

5. Siège de véhicule (1) selon au moins l'une des revendications précédentes,
**caractérisé par le fait que**
le châssis de liaison (13) réglable en hauteur présente un châssis en ciseaux, lequel comporte au moins deux bras de ciseaux (13A, 13B) qui sont disposés entre la partie assise (10) et l'embase de siège (11).

6. Siège de véhicule (1) selon au moins l'une des revendications précédentes,
**caractérisé par le fait que**
le dispositif de réglage (20) est dépourvu d'un dispositif de commande et/ou de régulation purement électronique, de telle sorte qu'un réglage est effectué mécaniquement.

7. Procédé pour le réglage en hauteur entièrement automatique d'un siège de véhicule (1) selon l'une des revendications 1 à 6, avec
- une partie assise (10) sur laquelle un utilisateur du siège de véhicule (1) peut prendre place ;
- au moins une embase de siège (11) pour le montage du siège de véhicule (1) sur un plancher de véhicule ;
- un châssis de liaison (13) réglable en hauteur, lequel relie mécaniquement l'une à l'autre la partie assise (10) avec l'embase de siège (11) de telle sorte que la partie assise (10) est déplaçable dans la direction de la hauteur par rapport à l'embase de siège (11),
**caractérisé par**
au moins un dispositif de réglage (20) pour régler et/ou limiter de manière entièrement automatique une hauteur de siège (S1) de la partie assise (10) pendant une charge de siège de la partie assise (10) par l'utilisateur, le dispositif de réglage (20) comportant au moins un moyen d'actionnement réglable (21), lequel actionne lui-même un mécanisme de réglage (22) du dispositif de réglage (20), dès que, par la charge d'assise de la partie assise (10), la hauteur d'assise (S1) descend au-dessous ou dépasse une valeur limite de hauteur (H1) prédéfinie par le moyen d'actionnement (21) en raison de la charge du siège de la partie assise (10), de telle sorte que la hauteur d'assise (S1) par autorégulation est ramenée à nouveau dans la valeur limite de hauteur (H11) de manière entièrement automatique par le dispositif de réglage (20) à chaque fois en fonction du degré de charge d'assise de la partie assise (10).
